# EUROPÄISCHE PATENTSCHRIFT

(11) **EP 2 369 966 B1**
(45) Veröffentlichungstag und Bekanntmachung des Hinweises auf die Patenterteilung: **31.08.2016**
(21) Anmeldenummer: 09752751.9
(22) Anmeldetag: 04.11.2009
(51) Int. Cl.: A47J 37/06

(54) **MITTELARM ZUR AUFNAHME EINER KONTAKTGRILL- ODER- BRATOBERPLATTE SOWIE KONTAKTGRILL- ODER BRATGERÄT MIT EINEM SOLCHEN MITTELARM**
CENTRAL ARM FOR HOLDING AN UPPER CONTACT GRILL PLATE OR UPPER GRILL PLATE AND CONTACT GRILL OR GRILLING DEVICE COMPRISING A CENTRAL ARM OF THIS TYPE
BRAS CENTRAL DESTINÉ À MAINTENIR UNE PLAQUE SUPÉRIEURE DE GRIL DOUBLE OU UNE PLAQUE SUPÉRIEURE DE CUISSON ET GRIL DOUBLE OU APPAREIL DE CUISSON ÉQUIPÉ DE CE BRAS CENTRAL

(30) Priorität: 05.11.2008 DE 102008056473
(43) Veröffentlichungstag der Anmeldung: 05.10.2011
(73) Patentinhaber: H.H. Scholz KG, 22143 Hamburg (DE)
(72) Erfinder: SCHOLZ, Kay, 22143 Hamburg (DE); LANGGUTH, Otto, 22889 Tangstedt (DE); ANKLAM, Karsten, 22941 Bargteheide (DE)
(74) Vertreter: Stork Bamberger
(86) Internationale Anmeldenummer: PCT/EP2009/008054
(87) Internationale Veröffentlichungsnummer: WO 2010/052025

(56) Entgegenhaltungen:
- EP-A1- 0 662 299
- WO-A2-2008/093330

## Beschreibung

Die Erfindung betrifft einen Mittelarm zur Aufnahme einer Kontaktgrill- oder Bratoberplatte, wobei der Mittelarm einen im Wesentlichen vertikalen Stützabschnitt und einen schwenkbar am vertikalen Stützabschnitt angeordneten Halteabschnitt, an dem die Kontaktgrill- oder Bratoberplatte befestigbar ist, aufweist. Des Weiteren betrifft die Erfindung ein Kontaktgrill- oder Bratgerät mit mindestens einer Grill- oder Bratoberplatte und einer Grill- oder Bratunterplatte, wobei die oder jede Kontaktgrill- oder Bratoberplatte über einen Mittelarm schwenkbar an der Kontaktgrill- oder Bratunterplatte angeordnet ist.

Solche Mittelarme kommen im Bereich von Kontaktgrill- oder Bratgeräten mit mindestens zwei zur Anlage am Grill- oder Bratgut bestimmten Kontaktplatten zum Einsatz. Solche Kontaktgrill- oder Bratgeräte sind z.B. aus der EP 0 662 299 B1 bekannt und umfassen eine Kontaktgrill- oder Bratoberplatte und eine Kontaktgrill- oder Bratunterplatte, wobei die Kontaktgrill- oder Bratoberplatte über einen Mittelarm schwenkbar an der Kontaktgrillunterplatte angelenkt ist. Beiden Kontaktplatten ist eine die elektrische Schaltung aufnehmende Einheit mit entsprechenden Bedienelementen zugeordnet, wobei die Einheit üblicherweise unterhalb der beiden Kontaktplatten angeordnet ist. Der Mittelarm ist üblicherweise zweigeteilt. Anders ausgedrückt ist ein Mittelarmelement im Bereich der Kontaktgrill- oder Bratunterplatte fest angeordnet. Ein zweites Mittelarmelement ist schwenkbar an dem ersten Mittelarmelement angeordnet und trägt die Kontaktgrill- oder Bratoberplatte. Im Bereich des Mittelarms sind üblicherweise zwei Einrichtungen zur Gewichtsentlastung vorgesehen. Eine erste Einrichtung zur Gewichtsentlastung, nämlich die die Hauptlast tragende Gewichtsentlastung ist im vertikal ausgerichteten, im Bereich der Kontaktgrill- oder Bratunterplatte angeordneten Mittelarmelement angeordnet. Die zweite Einrichtung zur Gewichtsentlastung, nämlich die zur Feineinstellung, ist im schwenkbaren, die Kontaktgrill- oder Bratoberplatte tragenden Mittelarmelement angeordnet.

Auch WO 2008/093330 A2 offenbart ein Kontaktgrillgerät mit einer oberen und einer unteren Grillplatte, wobei die Grillplatten mit Haltearmen verbunden sind, welche über eine Einrichtung zur Fixierung des Halteabschnitts gegenüber dem Stützabschnitt verfügen.

Die schwenkbar miteinander verbundenen bzw. zueinander angeordneten Kontaktplatten sind aus einer Schließstellung, in der die Kontaktgrill- oder Bratoberplatte mit der Kontaktgrill- oder Bratunterplatte bzw. dem Grill- oder Bratgut (kurz Gargut) in Kontakt steht - also aus einer zugeklappten Position -, in eine Bedienstellung, in der die Kontaktgrill- oder Bratoberplatte zum Einlegen bzw. Entnehmen des Garguts von der Kontaktgrill- oder Bratunterplatte weggeschwenkt - also in eine aufgeklappte Position, und umgekehrt bewegbar. Üblicherweise ist die Kontaktgrill- oder Bratoberplatte bewegbar, während die Kontaktgrill- oder Bratunterplatte ortsfest ist. Mindestens die die Hauptlast tragende Gewichtsentlastung, die im Bereich der Kontaktgrill- oder Bratunterplatte in dem der Kontaktgrill- oder Bratunterplatte zugeordneten festen Mittelarmelement angeordnet ist, dient dazu, die Handhabung insbesondere beim Öffnen der Kontaktgrill- oder Bratoberplatte zu erleichtern. Des Weiteren dient die genannte Gewichtsentlastung aber auch dazu, die Kontaktgrill- oder Bratoberplatte in einer weitgehend vertikalen Position - also der vollständig aufgeklappten Position- zu halten bzw. zu fixieren, um ein unerwünschtes "Zufallen" der Kontaktgrill- oder Bratoberplatte zu verhindern.

Die durch die Gewichtsentlastung bestehende Fixierung der Kontaktgrill- oder Bratoberplatte ausschließlich in der vollständig geöffneten Position weist jedoch den Nachteil auf, dass bereits kleinere Erschütterungen oder sonstige äußere Einflüsse dazu führen können, dass die Kontaktgrill- oder Bratoberplatte unerwünscht zufällt. Dadurch kann einerseits das Gargut beschädigt und damit unbrauchbar werden. Andererseits besteht dadurch auch eine Verletzungsgefahr für die Bedienperson. Ein weiterer Nachteil besteht darin, dass die Kontaktgrill- oder Bratoberplatte lediglich in den Endpositionen Schließstellung und Bedienstellung stabil gehalten bzw. fixiert ist, so dass nur begrenzte Einsatzmöglichkeiten gegeben sind.

Der Erfindung liegt damit die Aufgabe zugrunde, einen sicheren und universell einsetzbaren Mittelarm mit einer leicht handhabbaren Einrichtung zur variablen Fixierung der Kontaktgrill- oder Bratoberplatte zu schaffen. Der Erfindung liegt des Weiteren die Aufgabe zugrunde, ein entsprechendes Kontaktgrill- oder Bratgerät vorzuschlagen.

Die Aufgabe wird durch einen Mittelarm mit den eingangs genannten Merkmalen dadurch gelöst, dass dem Halteabschnitt eine Einrichtung zur Fixierung des Halteabschnitts gegenüber dem Stützabschnitt zugeordnet ist, wobei die Einrichtung zur Fixierung ein Bedienelement und eine Rasteinrichtung umfasst, und das Bedienelement mit der Rasteinrichtung zur Fixierung des Halteabschnitts in unterschiedlichen Schwenkstellungen gegenüber dem Stützabschnitt in Eingriff und zur freien Schwenkbarkeit des Halteabschnitts gegenüber dem Stützabschnitt außer Eingriff bringbar ist, wobei die Schwenkachse des Halteabschnitts etwa im Schnittpunkt der Mittelachsen des Halteabschnitts einerseits und des Stützabschnitts andererseits ausgebildet bzw. angeordnet ist, wobei die Rasteinrichtung vollständig innerhalb des Halteabschnitts angeordnet ist und zwei Nutenscheiben aufweist, die auf der Schwenkachse des Halteabschnitts angeordnet sind. Durch die erfindungsgemäße Ausbildung ist erstmalig und auf überraschend einfache Weise die Möglichkeit geschaffen, die Kontaktgrill- oder Bratoberplatte in allen gewünschten Winkelpositionen zwischen den beiden Endpositionen zu fixieren. Damit ist z.B. auch der Einsatz unter unterschiedlichen Dunstabzugshauben, insbesondere auch mit Hinterwand-Schrägabsaugung gewährleistet. Durch die mechanische Fixierung ist die Kontaktgrill- oder Bratoberplatte stets gesichert und kann ausschließlich durch manuelle Betätigung des Bedienelementes nach oben oder nach unten bewegt werden. Mit dieser erfindungsgemäßen Ausbildung wird eine konstruktiv besonders einfache, nämlich Teile sparende und damit kostengünstige Anordnung und Ausbildung der Einrichtung zur Fixierung sichergestellt. Durch die zentrale Anordnung der Schwenkachse kann die Einrichtung zur Fixierung direkt der Schwenkachse zugeordnet werden, wodurch Umlenkelemente oder dergleichen vermieden werden können. Diese Ausbildung ermöglicht des Weiteren auf besonders einfache und sichere Weise das Fixieren der Kontaktgrill- oder Bratoberplatte in gewünschten Positionen. Des Weiteren ermöglicht die erfindungsgemäße Einrichtung zur Fixierung erstmals auch das Anordnen von Kontaktgrill- oder Bratoberplatten mit größeren Dimensionen und damit mit höheren Gewichten an einem Mittelarm.

Die Aufgabe wird auch durch ein Kontaktgrill- oder Bratgerät der eingangs genannten Art dadurch gelöst, dass der Mittelarm nach einem der Ansprüche 1 bis 9 ausgebildet ist. Die sich daraus ergebenden Vorteile wurden bereits im Zusammenhang mit dem Mittelarm erwähnt, so dass zur Vermeidung von Wiederholungen auf die entsprechenden Passagen verwiesen wird.

Weitere zweckmäßige und/oder vorteilhafte Merkmale und Weiterbildungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Explosionsdarstellung eines erfindungsgemäßen Mittelarms,
- Fig. 2: eine Explosionsdarstellung eines eine Kontaktgrill- oder Bratoberplatte tragenden Mittelarms,
- Fig. 3: eine Seitenansicht eines Mittelarms mit Kontaktgrill- oder Bratoberplatte,
- Fig. 4: eine perspektivische Darstellung von Teilen des Halteabschnitts des Mittelarms mit der Einrichtung zur Fixierung,
- Fig. 5: eine Draufsicht auf einen Ausschnitt des Mittelarms, und
- Fig. 6: ein Kontaktgrill- oder Bratgerät mit Kontaktgrill- oder Bratober- und unterplatte.

Der in den Figuren dargestellte Mittelarm dient als Nachrüstsatz bzw. in Verbindung mit einer Kontaktgrill- oder Bratoberplatte als eigenständiges Grill- oder Bratgerät und kann für sich alleine oder in Kombination mit einer Kontaktgrill- oder Bratunterplatte zur Bildung eines Kontaktgrill- oder Bratgerätes eingesetzt werden.

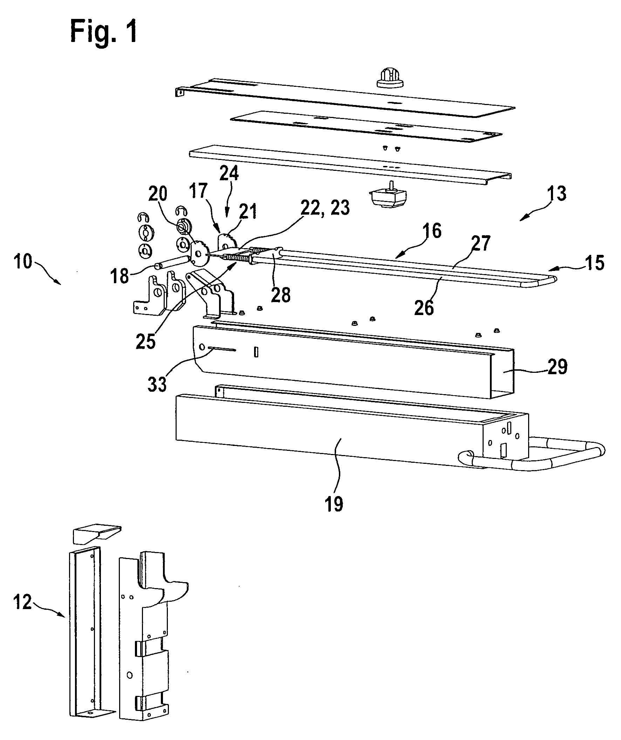

Die Figur 1 zeigt eine auseinander gezogene Darstellung eines Mittelarms 10, der zur Aufnahme einer Kontaktgrill- oder Bratoberplatte 11 ausgebildet und eingerichtet ist. Der Mittelarm 10 besteht im Wesentlichen aus einem vertikalen Stützabschnitt 12 und einem schwenkbar am Stützabschnitt 12 angeordneten Halteabschnitt 13. Die Bezeichnung "vertikaler Stützabschnitt 12" bedeutet, dass der Stützabschnitt 12 senkrecht zu einer üblicherweise durch einen Tisch, eine Unterlage oder dergleichen bzw. durch eine Kontaktgrill- oder Bratunterplatte 14 aufgespannten Ebene E ausgerichtet ist, wobei ausdrücklich auch eine leicht gegenüber der Senkrechten geneigte Ausrichtung eingeschlossen ist. An dem Halteabschnitt 13 ist die Kontaktgrill- oder Bratoberplatte 11 befestigbar.

Dem Halteabschnitt 13 ist eine Einrichtung 15 zur Fixierung des Halteabschnitts 13 gegenüber dem Stützabschnitt 12 zugeordnet. Die Einrichtung 15 zur Fixierung umfasst ein Bedienelement 16 und eine Rasteinrichtung 17. Das Bedienelement 16 ist mit der Rasteinrichtung 17 zur Fixierung des Halteabschnitts 13 in unterschiedlichen Schwenkstellungen gegenüber dem Stützabschnitt 12 in Eingriff und zur freien Schwenkbarkeit des Halteabschnitts 13 gegenüber dem Stützabschnitt 12 außer Eingriff bringbar. Anders ausgedrückt ist eine mechanische Wirkverbindung zum Fixieren herstellbar, wobei zum Lösen dieser Wirkverbindung für das Schwenken eine manuelle Betätigung notwendig ist. Die Schwenkachse 18 des Halteabschnitts 13 ist etwa im Schnittpunkt der Mittelachsen M₁ des Halteabschnitts 13 einerseits und M₂ des Stützabschnitts 12 andererseits ausgebildet bzw. angeordnet. Anders ausgedrückt ist die Schwenkachse 18 in Bezug auf den Anlenkpunkt zwischen Stützabschnitt 12 und Halteabschnitt 13 zentral angeordnet.

Die gesamte Rasteinrichtung 17 ist vollständig innerhalb des Halteabschnitts 13, und genauer in einem Gehäuse 19 des Halteabschnitts 17 angeordnet. Die Rasteinrichtung 17 weist vorzugsweise zwei Nutenscheiben 20, 21 auf. Diese Nutenscheiben 20, 21 sind auf der Schwenkachse 18 des Halteabschnitts beabstandet zueinander angeordnet und mit geeigneten Mitteln, beispielsweise Sprengringen oder dergleichen gesichert. Auf der Schwenkachse 18 sind somit mehrere Funktionalitäten vereint. Des Weiteren umfasst die Rasteinrichtung 17 Rastmittel 22, die mit den Nutenscheiben 20, 21 korrespondieren. Die Rastmittel 22 können mehrteilig oder einteilig ausgebildet sein.

Vorzugsweise ist das Rastmittel 22 ein einteiliges, plattenartiges Element 23, das einerseits so dünn ist, dass es in die Nuten der Nutenscheiben 20, 21 eingreifen kann und andererseits so breit ist, dass es gleichzeitig mit beiden Nutenscheiben 20, 21 in Wirkverbindung bringbar ist.

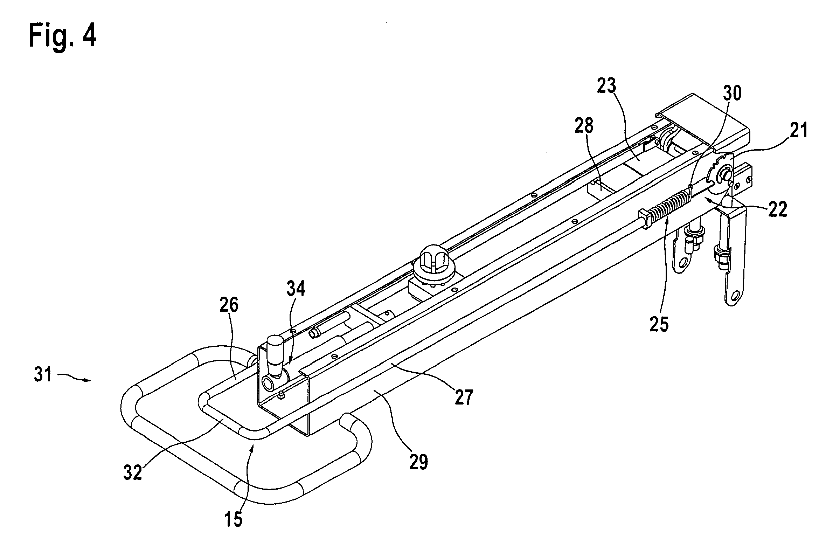

Das Rastmittel 22 ist dem Bedienelement 16 zugeordnet. Genauer ist das Rastmittel 22 an dem der Schwenkachse 18 des Halteabschnitts 13 zugewandten Ende 24 des Bedienelementes 16 angeordnet und mit diesem vorzugsweise lösbar verbunden. In dem gezeigten Ausführungsbeispiel endet das Bedienelement 16 in einem Abstand zu den Nutenscheiben 20, 21. Der Abstand wird durch das Rastmittel 22 in eingerastetem Zustand ausgeglichen bzw. überbrückt. Dieser Abstand ist variabel und kann durch die Länge des austauschbaren Bedienelementes 16 ausgeglichen werden. Um das Bedienelement 16 bzw. das Rastmittel 22 aus der eingerasteten Stellung (siehe z.B. Figur 4) außer Eingriff mit den Nutenscheiben 20, 21 zu bringen, ist das Bedienelement 16 gegen ein Rückstellelement 25, das dem Bedienelement 16 zugeordnet ist, durch eine Zugbewegung von der Schwenkachse 18 weg bewegbar.

Das Bedienelement 16 umfasst vorzugsweise zwei Raststangen 26, 27, an deren freien Ende 24 das Rastmittel 22 angeordnet ist. Die Raststangen 26, 27 sind ausgehend von den Nutenscheiben 20, 21 bzw. vom Rastmittel 22 linear nach vorne in Richtung der Stirnseite des Mittelarms 10 geführt. Gelagert oder abgestützt sind die Raststangen 26, 27 mindestens mittels eines Stützsteges 28, der als Widerlager für das Bedienelement 16 dient und in einem Abstand zu den Nutenscheiben 20, 21 angeordnet ist. Der Stützsteg 28 kann z.B. am Gehäuse 19 befestigt sein. In der bevorzugten Ausführungsform ist der Stützsteg 28 an einem Innengehäuse 29 befestigt, das innerhalb des Gehäuses 19 angeordnet ist und den Innenraum des Gehäuses 19 in mehrere Kammern unterteilt. Die Raststangen 26, 27 sind durch Öffnungen im Stützsteg 28 geführt. Der Stützsteg 28 ist vorzugsweise auch durch das Innengehäuse 29 geführt. Dazu ist das Innengehäuse 29 mit einem Schlitz 33 versehen, in den der Stützsteg 28 eingeführt ist. Der Schlitz 33 ist zur definierten Bewegung des Stützstegs 28 ausgebildet und eingerichtet.

Zwischen dem Stützsteg 28 und dem freien Ende 24 der Raststangen 26, 27 ist auf jeder Raststange 26, 27 eine Druckfeder als Rückstellelement 25 angeordnet, wobei die Druckfedern auf den Raststangen 26, 27 z.B. durch einen Sicherungspin 30 oder dergleichen gesichert ist. Die Sicherung der Druckfedern, die zur Veränderung des Federgewichts austauschbar sind, kann am freien Ende 24 auch durch das Rastmittel 22 erfolgen.

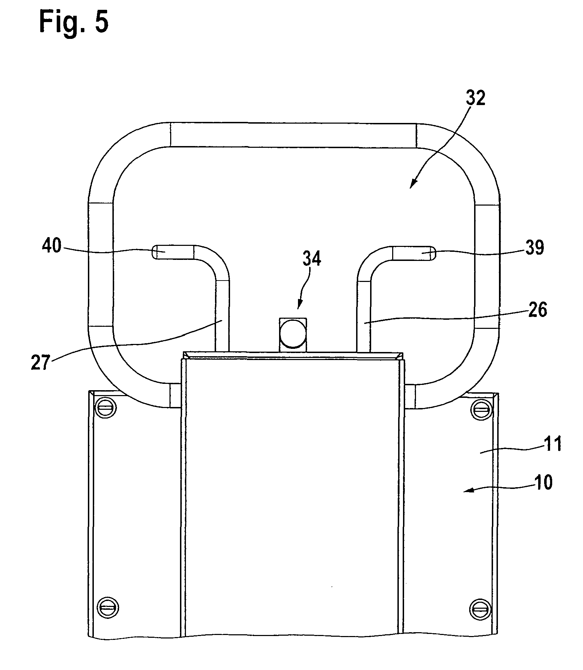

Das Bedienelement 16 bzw. die Raststangen 26, 27 weisen an dem dem Rastmittel 22 gegenüber liegenden Ende 31 ein Betätigungselement 32 auf. Das Betätigungselement 32 ist vorzugsweise ein Griff, der stirnseitig aus dem Gehäuse 19 des Mittelarms 10 heraus ragt. Der Griff bildet quasi eine Verlängerung der Raststangen 26, 27, die den Griff mit dem Rastmittel 22 verbinden. Vorzugsweise sind die Raststangen 26, 27 und das Betätigungselement 32, also der Griff, einstückig ausgebildet, derart, dass das Betätigungselement 32 integraler Bestandteil der Raststangen 26, 27 ist. In einer alternativen Ausführungsform (siehe Figur 5) ist das Betätigungselement 32 geteilt ausgebildet. Das bedeutet, dass die Raststangen 26, 27 jeweils ein freies Ende 39, 40 aufweisen, das aus dem Gehäuse 19 herausragt und vorzugsweise gebogen ausgebildet ist. In der gezeigten Ausführungsform weisen die freien Enden 39, 40 in entgegen gesetzte Richtungen, so dass zur Bedienung der Einrichtung 15 beide Hände notwendig sind. Dieses ist ein Sicherheitsaspekt bei der Bedienung der Einrichtung 15, der auch auf andere übliche Weise konstruktiv gelöst werden kann.

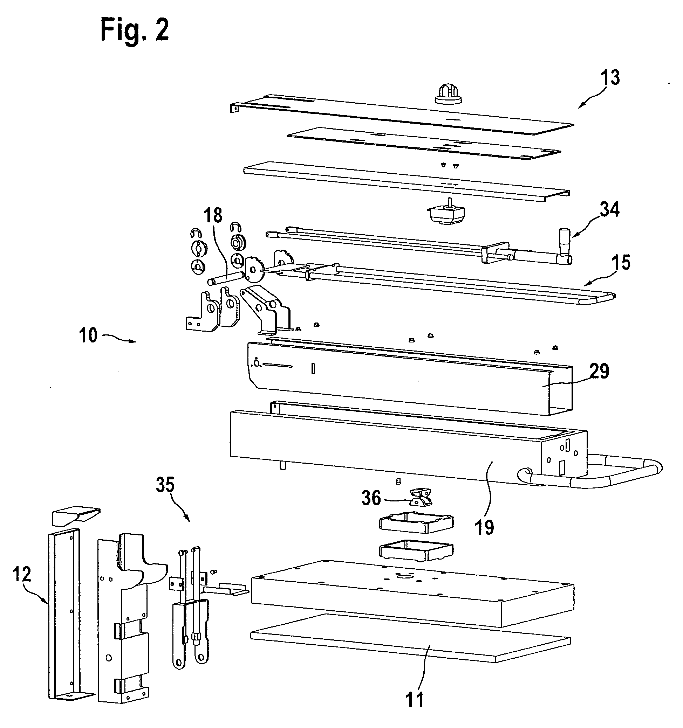

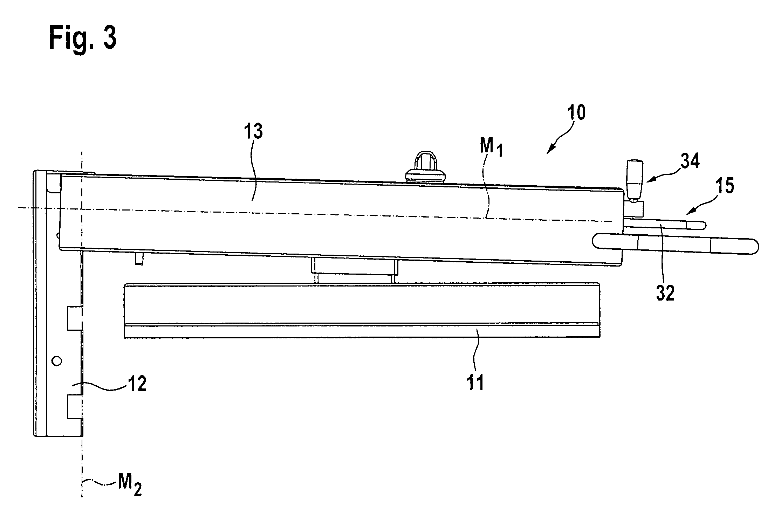

Wie bereits weiter oben erwähnt, ist dem Mittelarm 10 eine Kontaktgrill- oder Bratoberplatte 11 zugeordnet (siehe z.B. Figuren 2 und 3). Die Kontaktgrill- oder Bratoberplatte 11 kann fest oder beweglich, vorzugsweise über ein Kreuzgelenk 36 oder dergleichen am Mittelarm 10 befestigt sein. Der Mittelarm 10 kann des Weiteren optional weitere Komponenten aufweisen. Zum einen kann dem Mittelarm 10 eine erste Einrichtung 34 zur Gewichtsentlastung für die am Halteabschnitt 13 angeordnete Kontaktgrill- oder Bratoberplatte 11 zugeordnet sein. Diese erste Einrichtung 34 ist im Halteabschnitt 13 des Mittelarms 10 angeordnet. Zum anderen kann dem Mittelarm 10 eine zweite Einrichtung 35 zur Gewichtsentlastung zugeordnet sein, die im Stützabschnitt 12 des Mittelarms 10 angeordnet ist. Die Anordnung bzw. Platzierung der Schwenkachse 18 ist ebenfalls variabel und kann abweichend von der weiter oben beschriebenen Position am Halteabschnitt 13 auch am Stützabschnitt 12 erfolgen.

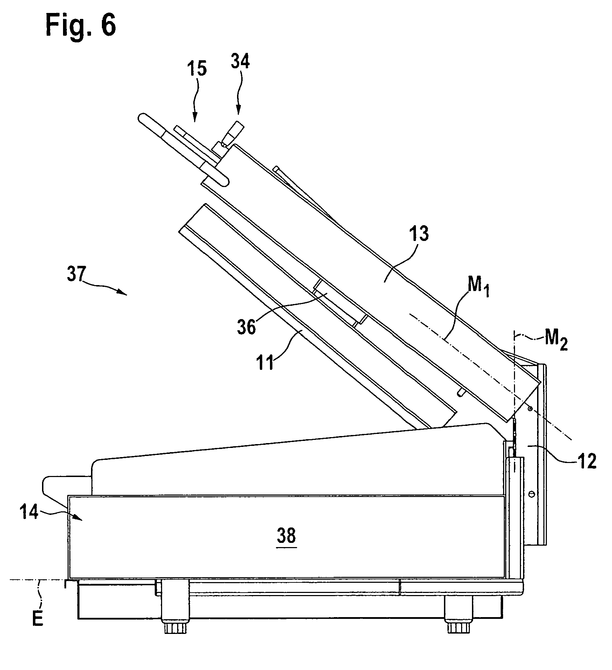

Der zuvor beschriebene Mittelarm 10 bildet zusammen mit der Kontaktgrill- oder Bratoberplatte 11 und der Kontaktgrill- oder Bratunterplatte 14 ein elektrisches Kontaktgrill- oder Bratgerät 37 (siehe z.B. Figur 6). Dem Kontaktgrill- oder Bratgerät 37 ist eine elektrische Einheit 38 zugeordnet, die vorzugsweise Bestandteil der Kontaktgrill- oder Bratunterplatte 14 ist. Der Mittelarm 10 kann aber zusammen mit der Kontaktgrill- oder Bratoberplatte 11 auch einer gasbetriebenen oder anderweitig betriebenen Grill- oder Bratunterplatte zugeordnet sein. Weiterhin können auch zwei oder noch mehr Kontaktgrill- oder Bratoberplatten 11 einer gemeinsamen Kontaktgrill- oder Bratunterplatte 14 oder anderen Grill- oder Bratunterplatten zugeordnet sein.

## Patentansprüche

1. Mittelarm (10), ausgebildet und eingerichtet zur Aufnahme einer Kontaktgrill- oder Bratoberplatte (11), wobei der Mittelarm (10) einen im Wesentlichen vertikalen Stützabschnitt (12) und einen schwenkbar am vertikalen Stützabschnitt (12) angeordneten Halteabschnitt (13), an dem die Kontaktgrill- oder Bratoberplatte (11) befestigbar ist, aufweist, wobei dem Halteabschnitt (13) eine Einrichtung (15) zur Fixierung des Halteabschnitts (13) gegenüber dem Stützabschnitt (12) zugeordnet ist, wobei die Einrichtung (15) zur Fixierung ein Bedienelement (16) und eine Rasteinrichtung (17) umfasst, und das Bedienelement (16) mit der Rasteinrichtung (17) zur Fixierung des Halteabschnitts (13) in unterschiedlichen Schwenkstellungen gegenüber dem Stützabschnitt (12) in Eingriff und zur freien Schwenkbarkeit des Halteabschnitts (13) gegenüber dem Stützabschnitt (12) außer Eingriff bringbar ist, wobei die Schwenkachse (18) des Halteabschnitts (13) etwa im Schnittpunkt der Mittelachsen M₁ und M₂ des Halteabschnitts (13) einerseits und des Stützabschnitts (12) andererseits ausgebildet bzw. angeordnet ist, **dadurch gekennzeichnet, dass** die Rasteinrichtung (17) vollständig innerhalb des Halteabschnitts (13) angeordnet ist und zwei Nutenscheiben (20, 21) aufweist, die auf der Schwenkachse (18) des Halteabschnitts (13) angeordnet sind.

2. Mittelarm nach Anspruch 1, **dadurch gekennzeichnet, dass** die Rasteinrichtung (17) Rastmittel (22) umfasst, die mit den Nuten in den Nutenscheiben (20, 21) korrespondieren.

3. Mittelarm nach Anspruch 2, **dadurch gekennzeichnet, dass** das Rastmittel (22) an dem der Schwenkachse (18) des Halteabschnitts (13) zugewandten Ende (24) des Bedienelementes (16) angeordnet ist.

4. Mittelarm nach einem der Ansprüche 1 bis 3, **dadurch gekennzeichnet, dass** das Bedienelement (16) zwei Raststangen (26, 27) umfasst, denen ein Rückstellelement (25) zugeordnet ist.

5. Mittelarm nach einem der Ansprüche 1 bis 4, **dadurch gekennzeichnet, dass** das Bedienelement (16) an dem der Rasteinrichtung (17) gegenüber liegenden Ende (31) ein Betätigungselement (32) aufweist.

6. Mittelarm nach Anspruch 5, **dadurch gekennzeichnet, dass** das Betätigungselement (32) stirnseitig aus einem Gehäuse (19) für den Mittelarm (10) heraus ragt.

7. Mittelarm nach Anspruch 5 oder 6, **dadurch gekennzeichnet, dass** die Raststangen (26, 27) das Betätigungselement (32) mit dem Rastmittel (22) verbinden.

8. Mittelarm nach einem der Ansprüche 5 bis 7, **dadurch gekennzeichnet, dass** die Raststangen (26, 27) und das Betätigungselement (32) einstückig ausgebildet sind, derart, dass das Betätigungselement (32) integraler Bestandteil der Raststangen (26, 27) ist.

9. Mittelarm (10) nach einem der Ansprüche 1 bis 8 mit einer Kontaktgrill- oder Bratoberplatte (11).

10. Kontaktgrill- oder Bratgerät (37) mit mindestens einer Grill- oder Bratoberplatte (11) und einer Grill- oder Bratunterplatte (14), wobei die oder jede Kontaktgrill- oder Bratoberplatte (11) über einen Mittelarm (10) schwenkbar an der Kontaktgrill- oder Bratunterplatte (14) angeordnet ist, **dadurch gekennzeichnet, dass** der Mittelarm (10) nach einem der Ansprüche 1 bis 9 ausgebildet ist.

## Claims

1. Centre arm (10) designed and configured for holding an upper contact grilling or roasting plate (11), the centre arm (10) having a substantially vertical supporting section (12) and a holding section (13) which is arranged pivotably on the vertical supporting section (12) and to which the upper contact grilling or roasting plate (11) can be attached, wherein a device (15) for fixing the holding section (13) relative to the supporting section (12) is associated with the holding section (13), the fixing device (15) comprising a control element (16) and a latch device (17), and the control element (16) being capable of being brought into engagement with the latch device (17) for fixing the holding section (13) in different pivot positions relative to the supporting section (12), and out of engagement for free pivoting of the holding section (13) relative to the supporting section (12), wherein the pivot shaft (18) of the holding section (13) is formed or arranged approximately at the point of intersection of the centre axes M₁ and M₂ of the holding section (13) on the one hand and the supporting section (12) on the other hand, **characterized in that** the latch device (17) is arranged completely within the holding section (13) and has two grooved discs (20, 21) which are arranged on the pivot shaft (18) of the holding section (13).

2. Centre arm according to claim 1, **characterised in that** the latch device (17) comprises latch means (22) which correspond to the grooves in the grooved discs (20, 21).

3. Centre arm according to claim 2, **characterised in that** the latch means (22) is arranged at the end (24) of the control element (16) which faces towards the pivot shaft (18) of the holding section (13).

4. Centre arm according to any one of claims 1 to 3, **characterised in that** the control element (16) comprises two latch rods (26, 27) with which a return element (25) is associated.

5. Centre arm according to any one of claims 1 to 4, **characterised in that** the control element (16) has an actuating element (32) at the end (31) opposite the latch device (17).

6. Centre arm according to claim 5, **characterised in that** the actuating element (32) protrudes at the end face out of the housing (19) for the centre arm (10).

7. Centre arm according to claim 5 or 6, **characterised in that** the latch rods (26, 27) connect the actuating element (32) to the latch means (22).

8. Centre arm according to any one of claims 5 to 7, **characterised in that** the latch rods (26, 27) and the actuating element (32) are constructed in one piece, in such a way that the actuating element (32) is an integral part of the latch rods (26, 27).

9. Centre arm (10) according to any one of claims 1 to 8 having an upper contact grilling or roasting plate (11).

10. Contact grilling or roasting device (37) having at least one upper grilling or roasting plate (11) and a lower grilling or roasting plate (14), the or each upper contact grilling or roasting plate (11) being arranged pivotably by a centre arm (10) on the lower contact grilling or roasting plate (14), **characterised in that** the centre arm (10) is designed according to any one of claims 1 to 9.

## Revendications

1. Bras central (10), conçu et développé pour maintenir une plaque supérieure de gril double ou de cuisson (11), ce bras central (10) présentant une section de soutien (12) sensiblement verticale et une section de retenue (13) qui est disposée pivotante sur la section de soutien (12) verticale, et sur laquelle la plaque supérieure de gril double ou de cuisson (11) peut être fixée, la section de retenue (13) comprenant un dispositif (15) de fixation de la section de retenue (13) par rapport à la section de soutien (12), lequel dispositif (15) de fixation comprenant un élément de commande et (16) et un dispositif d'encliquetage (17), l'élément de commande (16) muni du dispositif d'encliquetage (17) pouvant être bloqué dans différentes positions par rapport à la section de soutien (12) pour fixer la section de retenue (13), et libérée pour permettre à la section de retenue (13) de pivoter librement par rapport à la section de soutien (12), l'axe de pivotement (18) de la section de retenue (13) ayant été conçu et développé de façon à se trouver à peu près au niveau du point d'intersection des axes centraux M₁ et M₂ de la section de retenue (13) d'une part et de la section de soutien (12) d'autre part, et **caractérisé en ce que** le dispositif d'encliquetage (17) est totalement intégré à la section de retenue (13) et est muni de deux disques à encoches (20, 21), montés sur l'axe de pivotement (18) de la section de retenue (13).

2. Bras central selon la revendication 1, **caractérisé en ce que** le dispositif d'encliquetage (17) comprend un moyen d'encliquetage (22) correspondant aux encoches des disques à encoches (20, 21).

3. Bras central selon la revendication 2, **caractérisé en ce que** le moyen d'encliquetage (22) est placé à l'extrémité (24) de l'élément de commande (16) orientée vers l'axe de pivotement (18) de la section de retenue (13).

4. Bras central selon les revendications 1 à 3, **caractérisé en ce que** l'élément de commande (16) comprend deux tiges d'arrêt (26, 27) montées sur un organe de réarmement (25).

5. Bras central selon les revendications 1 à 4, **caractérisé en ce que** l'élément de commande (16) comprend un élément d'actionnement (32) monté sur l'extrémité (31) opposée au dispositif d'encliquetage (17).

6. Bras central selon la revendication 5, **caractérisé en ce que** l'élément d'actionnement (32) dépasse à l'avant d'un boîtier (19) destiné au bras central (10).

7. Bras central selon la revendication 5 ou 6, **caractérisé en ce que** les tiges d'arrêt (26, 27) relient l'élément d'actionnement (32) au moyen d'encliquetage (22).

8. Bras central selon l'une des revendications 5 à 7, **caractérisé en ce que** les tiges d'arrêt (26, 27) et l'élément d'actionnement (32) sont fabriqués d'une seule pièce, de façon à ce que l'élément d'actionnement (32) fasse partie intégrante des tiges d'arrêt (26, 27).

9. Bras central (10) selon l'une des revendications 1 à 8 avec une plaque supérieure de gril double ou de cuisson (11).

10. Appareil à gril double ou de cuisson (37) avec au moins une plaque supérieure de gril ou de cuisson (11) et une plaque inférieure de gril ou de cuisson (14), dans lequel la plaque supérieure de gril double ou de cuisson (11) ou chacune d'entre elles est disposée de façon pivotante sur la plaque inférieure de gril double ou de cuisson (14) par l'intermédiaire d'un bras central (10), **caractérisé en ce que** le bras central (10) est conçu selon l'une des revendications 1 à 9.
